# EUROPEAN PATENT SPECIFICATION

(11) **EP 1 695 585 B1**
(45) Date of publication and mention of the grant of the patent: **11.12.2019**
(21) Application number: 04796343.4
(22) Date of filing: 22.10.2004
(51) Int. Cl.: H04M 1/665, H04M 1/673, H04M 3/38, H04M 15/00, H04W 8/18, H04W 12/08, H04W 4/24

(54) **METHOD, SYSTEM, MOBILE TERMINAL AND COMPUTER PROGRAM PRODUCT FOR CONTROLLING USAGE OF A MOBILE TERMINAL**
VERFAHREN, SYSTEM, MOBILES ENDGERÄT UND COMPUTERPROGRAMMPRODUKT ZUR STEUERUNG DER BENUTZUNG EINES MOBILEN ENDGERÄTS
PROCEDE, SYSTEME, TERMINAL MOBILE ET PRODUIT-PROGRAMME INFORMATIQUE POUR CONTROLER L'UTILISATION D'UN TERMINAL MOBILE

(30) Priority: 15.12.2003 US 736079
(43) Date of publication of application: 30.08.2006
(73) Proprietor: Sony Ericsson Mobile Communications AB, 221 88 Lund (SE)
(72) Inventor: HILL, Lee, Cary, NC 27519 (US); STEPHENS, Debra, Cary, NC 27519-5211 (US)
(74) Representative: Neusser, Sebastian
(86) International application number: PCT/US2004/035347
(87) International publication number: WO 2005/062657

(56) References cited:
- EP-A1- 1 445 923
- WO-A-92/16078
- WO-A-2004/077797
- WO-A1-02/069660
- DE-A1- 10 128 948
- FR-A- 2 824 219
- JP-A- 2002 027 092
- US-A- 4 640 986
- US-A- 5 884 193

## Description

### BACKGROUND OF THE INVENTION

The present invention relates to the field of communications in general and more particularly, to usage of mobile terminals for communications.

Wireless communication systems (networks) are commonly employed to provide voice and data communications to subscribers. For example, analog cellular radiotelephone systems, such as those designated AMPS, ETACS, NMT-450, and NMT-900, have long been deployed successfully throughout the world. Digital cellular radiotelephone systems such as those conforming to the North American standard IS-54 and the European standard GSM have been in service since the early 1990's. More recently, a wide variety of wireless digital services broadly labeled as PCS (Personal Communications Services) have been introduced, including advanced digital cellular systems conforming to standards such as IS-136 and IS-95, lower-power systems such as DECT (Digital Enhanced Cordless Telephone) and data communications services such as CDPD (Cellular Digital Packet Data). These and other systems are described in The Mobile Communications Handbook, edited by Gibson and published by CRC Press (1996).

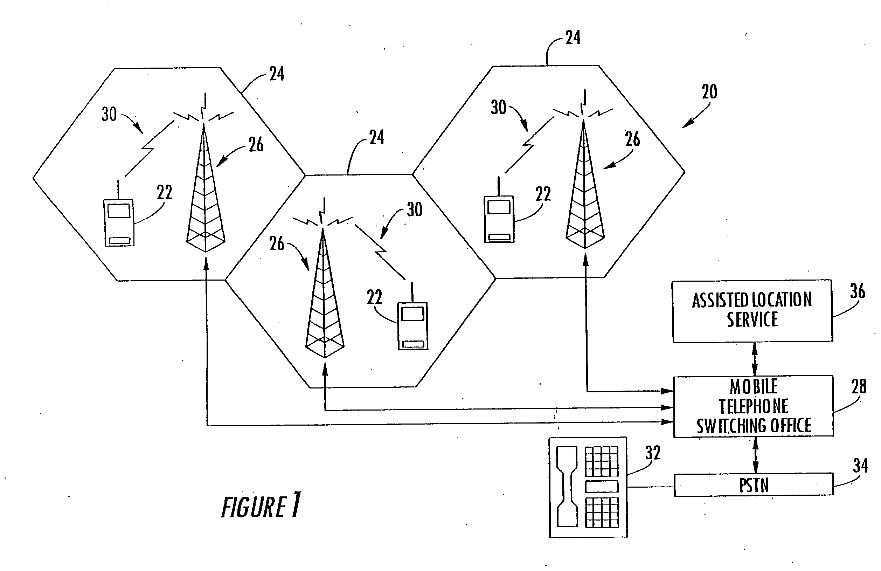

**Figure 1** illustrates a conventional terrestrial mobile (wireless) telecommunications network **20** that may implement any one of a variety of known wireless communications standards including uplink and downlink signals. The wireless network may include one or more wireless mobile terminals **22** that communicate with a plurality of cells **24** served by base stations **26** and a mobile telephone switching office (MTSO) **28.** Although only three cells **24** are shown in **Figure 1****,** a typical cellular radiotelephone network may comprise hundreds of cells, and may include more than one MTSO **28** and may serve thousands of wireless mobile stations **22.**

The cells **24** generally serve as nodes in the network **20,** from which links (connections) are established between wireless mobile terminals **22** and a MTSO **28,** by way of the base stations **26** servicing the cells **24.** Each cell **24** will have allocated to it one or more dedicated control channels and one or more traffic channels. The control channel is a dedicated channel that may be used for downlink transmission (network to mobile) of cell identification and paging information. The traffic channels carry the voice and data information. Through the network **20,** a duplex (downlink and uplink) radio communication connection **30** may be effected between two wireless mobile stations **22** or between a wireless mobile station **22** and a landline telephone user **32** via a public switched telephone network (PSTN) **34.** The function of the base station **26** is commonly to handle the radio communications between the cell **24** and the wireless mobile station **22.** In this capacity, the base station **26** functions chiefly as a relay station for data and voice signals. It is also know to provide mobile telecommunications networks in which the base stations are satellites, having associated coverage areas, rather than terrestrial base stations.

The mobile terminals **22** may operate to provide communication services related to voice telecommunications in addition to other services, such as internet access, email, messaging and the like. Such services are often provided by the telecommunications network **20** on a usage based pricing plan. For example, airtime charges, long distance charges, differential charges for particular services, differential charges for access to a network remote from the home provider (roaming) charges and the like may be associated with usage of a mobile terminal **22.** Accordingly, undesirable costs can be incurred from unauthorized usage of the mobile terminals **22,** which are typically portable devices that may be readily lost or misplaced. Therefore, it is known to provide a lockout feature on such mobile terminals. Typically, the mobile terminal **22** includes a menu option accessible to a user allowing the user to enter a security lockout code. After entry of the code and activation of the security feature, the security code has to be entered before a user is allowed access to the services offered by the mobile terminal **22.** As a result, an individual coming upon a lost or misplaced mobile terminal **22** may be prevented from making use of the services provided by the mobile terminal **22** at the expense of the owner.

Another approach to controlling the risks of economic loss caused by lost or misplaced mobile terminals **22** is provision of prepaid mobile terminals. Such devices include a time limit on the services provided by the mobile terminal **22** at the time purchased. As a result, even if the mobile terminal is misplaced, the exposure to loss for the owner is limited to the total dollar value of the time authorized for the mobile terminal. Another security feature available for mobile terminals where service providers provide access to airtime with associated charges both for placed and received calls is to provide call blocking to limit usage of the cell phone to receive calls.

WO 92/16078 describes a mobile telephone, system and method that is adapted for rental use, US 5,884,193 describes a system and method for call restriction in a wireless communication device and FR2824219 describes a selective access network call restriction filtering/programming method.

JP 2002 027092 A discloses a portable terminal having a plurality of different functions, wherein a usage restriction setting individually restricts the use of different functions. A personal identification input is determined to match a personal identification number, to perform a function whose use is restricted.

DE 101 28 948 A1 discloses a method for enabling or disabling properties and/or functions of a mobile radio terminal, the disabled or enabled properties and/or functions being stored in a memory of the subscriber identification module (SIM) and/or of the mobile radio terminal.

WO 02/069660 A1 discloses a location update procedure in a mobile communications system, wherein a mobile subscriber is allowed to register in a first communications service domain, a subscription restriction information is received indicating, whether a roaming restriction for a roaming into a second communications service domain applies for the mobile subscriber, based on which a location update procedure is performed.

EP 1 445 923 A1 discloses a camera-equipped mobile communication terminal allowing camera functions to be selectively inhibited according to camera-function inhibition flags included in a camera-function limiting signal broadcast by a radio station or based on GPS-measured location and camera-function inhibition flags for each operation-limited area.

### SUMMARY OF THE INVENTION

The invention is defined in the independent claims. Additional features of the invention are provided in the dependent claims. The embodiments and/or examples disclosed in the following description which are not covered by the appended claims are considered as not being part of the present invention but as constituting examples useful for understanding the invention.

Embodiments of the present invention include methods for controlling usage of a mobile terminal. A usage specification including an identification of allowed numbers, an identification of restricted numbers, a usage time limitation, an expiration value and/or a specification of enabled services of the mobile terminal that are restricted is received. It will be understood that the listing of possible limitations included in a usage specification according to the present invention and the term "and/or" as used herein refers to and encompasses any and all possible combinations of one or more of the limitations. Usage of the mobile terminals limited based on the received usage specification responsive to receipt of a valid authorization code. The authorization code and/or the usage specification may be received from a keypad and/or input screen of the mobile terminal. Alternatively, the authorization code and/or the usage specification are received from a remote user over a wireless communication connection.

In some embodiments of the present invention, the authorization code is received from a remote user over a wireless communication connection and the authorization code is encoded to restrict viewing of the authorization code by a user of the mobile terminal. The authorization code may be a reset code and the method may include over-riding the usage specification responsive to receipt of the reset code. Over-riding the usage specification may include selecting an alternate usage specification responsive to receipt of the reset code. The alternate usage specification may include no restrictions to return the mobile terminal to a normal operating mode.

In other embodiments of the present invention, receiving a usage specification includes accessing a usage controls menu of the mobile terminal. A user is prompted for entry of the authorization code and the authorization code is verified. A menu of usage restriction options is provided to a user only if the authorization code is verified as valid. A selection of restrictions is received from the user responsive to the provided menu and the usage specification is generated responsive to the received selection of restrictions.

In further embodiments of the present invention, receiving a selection of restrictions includes receiving a disable request and generating the usage specification includes generating a usage specification that includes no restrictions to place the mobile terminal in a normal operating mode. Receiving a selection of restrictions may include receiving an identification of allowed numbers. In some embodiments, providing a menu includes providing a listing of numbers from a phone book of the mobile terminal to a display of the mobile terminal and receiving a designation of ones of the displayed listing of numbers. The selection of restrictions may include an identification of restricted numbers and/or a specification of enabled services of the mobile terminal that are restricted.

The specification of enabled services may include a restriction on internet access services of the mobile terminal. The specification of enabled services may include a restriction on placement of long distance calls and/or calls to specified area codes from the mobile terminal. The specification of enabled services also may include a restriction on placement of calls to specified area codes, such as a designation of allowed area codes for calls from the mobile terminal. In other embodiments of the present invention, receiving a selection of restrictions includes receiving a restriction on placement of calls when the mobile terminal is in a roaming mode.

In other embodiments of the present invention, limiting usage of the mobile terminal includes allowing placement of emergency calls even if usage of the mobile terminal is otherwise restricted. Placement of calls to a specified number may also be allowed even if usage of the mobile terminal is otherwise restricted. The usage time limitation may include a limitation on times of day when the mobile terminal may be used and/or a limitation on the duration of usage of the mobile terminal.

In further embodiments of the present invention, usage control systems for a mobile terminal are provided. A usage control system includes a user interface circuit for receiving from a user an authorization code and a usage specification including an identification of allowed numbers, an identification of restricted numbers, a usage time limitation, an expiration value and/or a specification of enabled services of the mobile terminal that are restricted. The system further includes an access circuit configured to limit usage of the mobile terminal based on the received usage specification responsive to receipt of a valid authorization code. Mobile terminals including the usage control system are also provided.

In other embodiments of the present invention, the user interface includes a keypad and/or input screen of the mobile terminal. The user interface includes a transceiver configured to receive the authorization code and optionally also the usage specification, from a remote user over a wireless communication connection. The user interface may be configured to restrict viewing of the authorization code by a user of the mobile terminal.

In further embodiments of the present invention, the authorization code is a reset code and the access circuit is further configured to over-ride the usage specification responsive to receipt of the reset code to return the mobile terminal to a normal operating mode. The user interface may include a usage controls menu of the mobile terminal and a menu of usage restriction options. The system may further include a memory including an identification of a valid authorization code and usage restriction options. The user interface may be configured to retrieve a listing of numbers from a phone book of the mobile terminal and to display the listing of numbers on a screen of the mobile terminal responsive to selection of an associated option on the menu of usage restriction options and to receive a designation of ones of the displayed listing of numbers to include in the usage specification.

Computer program products for controlling usage of a mobile terminal are also provided.

### BRIEF DESCRIPTION OF THE DRAWINGS

**Figure 1** is a schematic block diagram illustrating a conventional terrestrial wireless communication system;
**Figure 2** is a schematic block diagram illustrating a mobile terminal including a system for controlling usage of the mobile terminal according some to embodiments of the present invention;
**Figure 3** is a flow chart illustrating operations for controlling usage of a mobile terminal according to some embodiments of the present invention;
**Figure 4** is a flow chart illustrating operations for controlling usage of a mobile terminal according to further embodiments of the present invention; and
**Figure 5** is a flow chart illustrating operations for limiting usage of a mobile terminal when a service request is received according to some embodiments of the present invention.

### DETAILED DESCRIPTION

The present invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

The scope of the invention is defined by the appended claims.

As will be appreciated by one of skill in the art, the present invention may be embodied as a method, system, mobile terminal or computer program product. Accordingly, the present invention may take the form of an entirely hardware embodiment, an entirely software embodiment or an embodiment combining software and hardware aspects, all generally referred to herein as a "circuit."

Computer program code for carrying out operations of the present invention may be written in an object oriented programming language such as Java®, Smalltalk or C++, a conventional procedural programming languages, such as the "C" programming language, or lower-level code, such as assembly language and/or microcode. The program code may execute entirely on a single processor and/or across multiple processors, as a stand-alone software package or as part of another software package.

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart illustration and/or block diagram block or blocks.

The computer program instructions may also be loaded onto a computer or other programmable data processor to cause a series of operational steps to be performed on the computer or other programmable processor to produce a computer implemented process such that the instructions that execute on the computer or other programmable processor provide steps for implementing the functions or acts specified in the flowchart illustration and/or block diagram block or blocks.

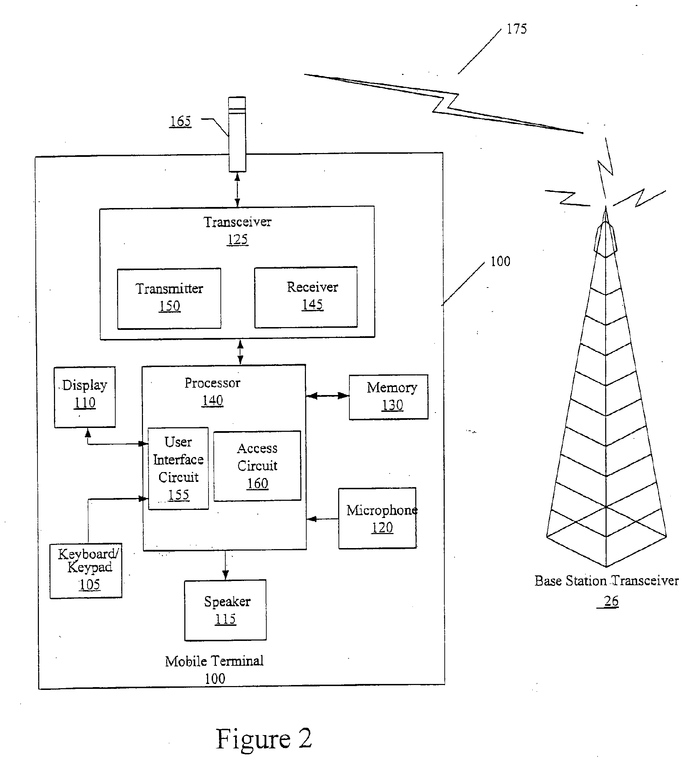

Embodiments of the present invention will now be further described with reference to the schematic block diagram illustration of a mobile terminal **100** in **Figure 2. Figure 2** illustrates a mobile wireless terminal **100** receiving a wireless communication network signal **175.** The mobile terminal **100** may include a keyboard/keypad **105,** a display **110,** a speaker **115,** a microphone **120,** a network transceiver **125,** and a memory **130** that communicate with a processor **140.** The network transceiver **125** typically comprises a transmitter circuit **150** and a receiver circuit **145,** which respectively transmit outgoing radio frequency signals to a base station **26** of the wireless communication network and receive incoming radio frequency signals from the base station **26** via an antenna **165.** While a single antenna **165** is shown in **Figure 2****,** it is to be understood that multiple antennas and/or different types of antennas may be utilized based on the types of signals being received. The radio frequency signals transmitted between the mobile terminal **100** and the base station **26** may comprise both traffic and control signals (*e.g*., paging signals/messages for incoming calls), which are used to establish and maintain communication with another party or destination, and may provide uplink and/or downlink communications. However, the present invention is not limited to such two-way communication systems.

With respect to their role in various conventional operations of the mobile terminal **100,** the foregoing components of the mobile terminal **100** may be included in many conventional mobile terminals and their functionality is generally known to those skilled in the art. It should be further understood, that, as used herein, the term "mobile terminal" may include a cellular radiotelephone with or without a multi-line display; a Personal Communications System (PCS) terminal that may combine a cellular radiotelephone with data processing, facsimile and data communications capabilities; a Personal Data Assistant (PDA) that can include a radiotelephone, pager, Internet/intranet access, Web browser, organizer, calendar and/or a global positioning system (GPS) receiver; and a conventional laptop and/or palmtop receiver or other device that includes a radiotelephone transceiver. Mobile terminals may also be referred to as "pervasive computing" devices.

Also shown in the mobile terminal **100** of **Figure 2** is a user interface circuit **155** and an access circuit **160** that, as illustrated in **Figure 2****,** may be implemented in the processor **140.** However, it is to be understood that the user interface circuit **155** and the access circuit **160** may also be separate circuits operatively coupled as described herein to various other components of the mobile terminal **100.** The user interface circuit **155** is configured to receive, from a user, an authorization code and a usage specification. The usage specification may include one or more restrictions or limitations on the usage of the mobile terminal **100,** such as an identification of allowed numbers, an identification of restricted numbers, a usage time limitation, an expiration value for the usage specification and/or a specification of enabled services of the mobile terminal that are restricted, all responsive to receipt of a valid authorization code. The user interface circuit **155** may include or be operatively coupled to various user input/output devices such as the display **110** (which may be a touchscreen supporting both input and output) and the keyboard/keypad **105** to obtain input from a user as well as to prompt a user with information suitable for obtaining the necessary information to define a usage specification for the mobile terminal **100.** The access circuit **160** is configured to limit usage of the mobile terminal **100** based on the received usage specification from the user interface circuit **155.**

The user interface circuit **155** and the access circuit **160** may thus provide a usage control system for the mobile terminal **100** to limit usage of the mobile terminal **100.** For example, an authorized user could specify allowed numbers that could be called (and/or from which calls could be received) by a user of the mobile terminal **100** while the usage specification was active. Further examples include designating restricted numbers not allowed for usage with the mobile terminal **100.** In addition, a prepaid phone configuration could be simulated by specifying a maximum time of usage for the mobile terminal **100** while the usage specification is in effect. In addition, various services of the mobile terminal **100** could be restricted such as locking out calls in a roaming mode where additional air access times may apply, locking out internet access, multimedia messaging access, email, camera and/or video functions and the like and restricting or preventing long distance call placement and/or placement of calls to specified area codes (or only allowing access to specified area codes).

Usage control for a mobile terminal according to some embodiments of the present invention may allow a parent or other user to establish limitations on the use of the mobile terminal by other users, thus allowing parental controls on cell phone usage, for example, by children. Similarly a company could control corporate phone usage.

Examples of such usage specifications may vary in different embodiments of the present invention. For example, a father could set a two hour limit on the mobile terminal and give the mobile terminal to a child for their use. Once the child user reaches the maximum amount (2 hours) of airtime consumption, the mobile terminal would become inoperable. An exception could be provided, for example, for emergency (E911) calls and/or other specified always on call numbers that would not be subject to restriction (i.e., specified as available regardless of airtime and/or restrictions included in the usage specification, such as the parents' phone numbers).

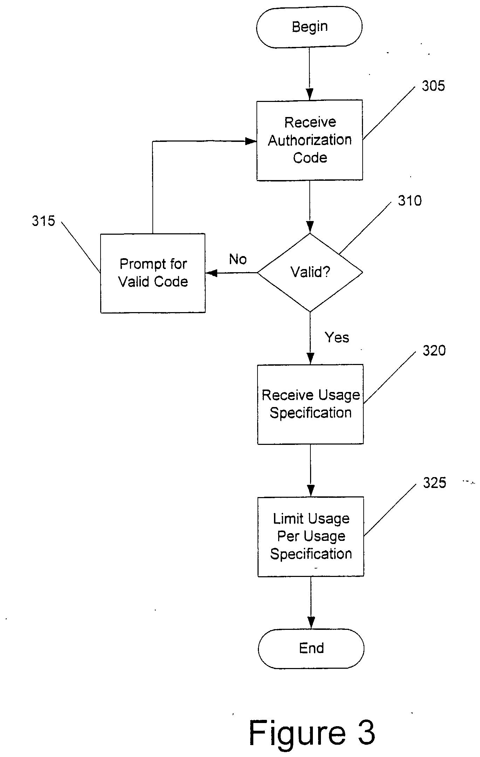

**Figures 3** through **5** are flowchart illustrations of operations that may be carried out by a mobile terminal **100** according to some embodiments of the present invention. Operations related to controlling usage according to some embodiments of the present invention will now be described with reference to the flow chart diagram of **Figure 3****.** As shown in **Figure 3****,** operations begin at **Block 305** with receipt of an authorization code by the mobile terminal **100.** If the authorization code is valid **(Block 310),** a usage specification is received, including an identification of allowed numbers, an identification of restricted numbers, a usage time limitation, an expiration value and/or a specification of enabled services of the mobile terminal 100 that are restricted **(Block 320).** If the received authorization code is not valid **(Block 310),** the user is prompted for a valid code **(Block 315).** Usage of the mobile terminal 100 is limited based on the received usage specification if a valid authorization code has been provided **(Block 325).** It will be understood that. while the flowchart of **Figure 3** illustrates that the usage specification is only obtained after a validated authorization code is entered, the usage specification may be received regardless of the validity of the authorization code. Usage limitations will only be applied and/or changed where a valid authorization code is received.

The usage specification received at **Blocks 305** and **320** may be received, for example, from a keypad **105** or input display screen **110** or audible control of the mobile terminal **100.** The authorization code, and optionally also the usage specification, is received from a remote user over a wireless communication connection **175.** In other words, a remote user could be allowed to manipulate the usage specification by sending data/signals from a communication device at their location to a controlled mobile terminal **100.** Similarly, a remote user could generate the changes through, for example, a website maintained by a wireless service provider. Changes to the usage specification could still be controlled by allowing modification only following entry of a valid authorization code by a remote user rather than allowing uncontrolled modification. Thus, for example, a child who had used up their time allocation under a pre-established usage specification could contact a parent and obtain an additional allocation of time of usage for the mobile terminal **100** without having first to return the mobile terminal **100** to the parent.

The authorization code entered into the mobile terminal at **Block 305** may be encoded to restrict viewing of the authorization code by a user of the mobile terminal **100.** In some embodiments of the present invention, the authorization code may be a reset code and a currently valid/active/unexpired usage specification may be overridden responsive to receipt of such a reset code. Such embodiments using a reset code may be particularly suited to remote user updating on the restrictions on a mobile terminal **100.** In particular embodiments of the present invention, overriding the usage specification may include selecting an alternate usage specification responsive to receipt of the reset code. The alternate usage specification may include no restrictions returning a mobile terminal to a normal operating mode where the usage control system of the present invention does not limit usage of the mobile terminal **100.**

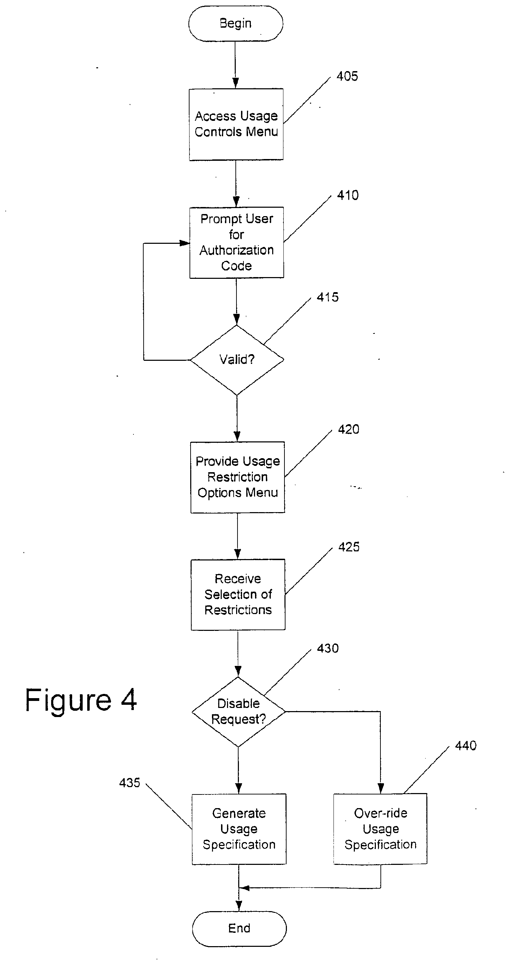

Further embodiments of controlling usage of a mobile terminal according to the present invention will now be described with reference to the flowchart illustration of **Figure 4. Figure 4** illustrates particular embodiments for receiving a usage specification from an authorized user and generating a usage specification controlling usage of the mobile terminal based on the input usage specification information. As shown in **Figure 4****,** operations begin at **Block 405** by accessing a usage controls menu of the mobile terminal **100.** For example, the usage controls menu may be a main menu option or be available under a tool kit, settings, or the like option provided by the operating system of the mobile terminal **100.** A user is then prompted for an authorization code **(Block 410),** for example, by the processor **140** generating display information on the display **110.** The authorization code is verified and, if valid, **(Block 415),** a menu of usage restriction options is provided to a user **(Block 420).** If the provided authorization code is not valid **(Block 415),** operations may return to **Block 410** to provide the user a further opportunity to enter a valid authorization code. However, it may be desirable to limit the number of opportunities provided to enter a valid authorization code to increase the difficulty of a frequent user, such as a child, from determining the authorization code by trial-and-error.

The usage restriction options menu may include a variety of options, such as identification of allowed call numbers, identification of disallowed call numbers, entry of a usage time limit, entry of an expiration time window for the usage specification, or a specification of an enabled service of a mobile terminal that is to be restricted. The usage time limit may be a time of day related limit, such as no usage during school class hours, or an hour limit on the amount of usage over a specified time period. A selection of one or more of the restrictions is received from the user responsive to the provided usage restriction options menu **(Block 425).** For example, a parent could first select a usage duration limitation and designate two hours followed by selecting the identification of allowed numbers restriction option and entering numbers that the child user would be allowed to call from the mobile terminal.

One of the available options from the usage restriction options menu, or as provided by a transmitted reset code from a remote location, may be a disable request. In such cases, responsive to receipt of a disable request **(Block 430)** a previously activated usage specification may be overridden **(Block 440).** Where the received usage specification is not such a disable request **(Block 430),** a usage specification is generated responsive to the selection of restrictions received at **Block 425 (Block 435).** In addition to overriding a usage specification by a disable request, limitations on the use of the mobile terminal **100** may also be removed in various embodiments of the present invention by generating a usage specification containing no limitations to place the mobile terminal in a normal operating mode.

In some embodiments of the present invention, the menu of usage restrictions provided at **Block 420** for particular restriction options may be a multi-level menu structure to facilitate user entry of the user specification information. For example, selecting an option allowing identification of allowed and/or restricted numbers may provide the option to the user of selecting the identification of numbers based on a listing of numbers from a phone book of the mobile terminal **100.** Such a phone book may be maintained, for example, in the memory **130 (****Figure 2****).** The listing of numbers from the phone book may be displayed on the display **110** of the mobile terminal **100** and the selection of restrictions received at **Block 425** may be received by receiving a designation of ones of the displayed listing of numbers. For example, the keyboard/keypad **105** may include arrow or toggle stick control of a cursor on the display **110** to move to various displayed numbers and select a highlighted number for inclusion in the usage specification.

As discussed previously, the restrictions entered at **Block 425** need not be limited to restrictions on placement of calls from the mobile terminal **100** but may also relate to particular services provided by the mobile terminal. For example, the enabled services for the mobile terminal may include internet access services and the received selection of restrictions at **Block 425** may disable or restrict usage of such internet services. Similarly, the received selection of restrictions at **Block 425** may include a restriction on placement of long distance calls and/or calls to a specified area code from the mobile terminal. Restrictions on roaming and the like may also be supported by providing appropriate options on the usage restriction options menu at **Block 420** and receiving corresponding user input at **Block 425.** As discussed above, exceptions to the various entered restrictions may also be preprogrammed in the mobile terminal **100,** such as allowing placement of emergency calls even if one or more other usage restriction would otherwise limit placement of such calls. Similarly, specified numbers, such as a parent's home number, may be maintained as always allowed even without entry of such a number as an allowed number during generation of a usage specification.

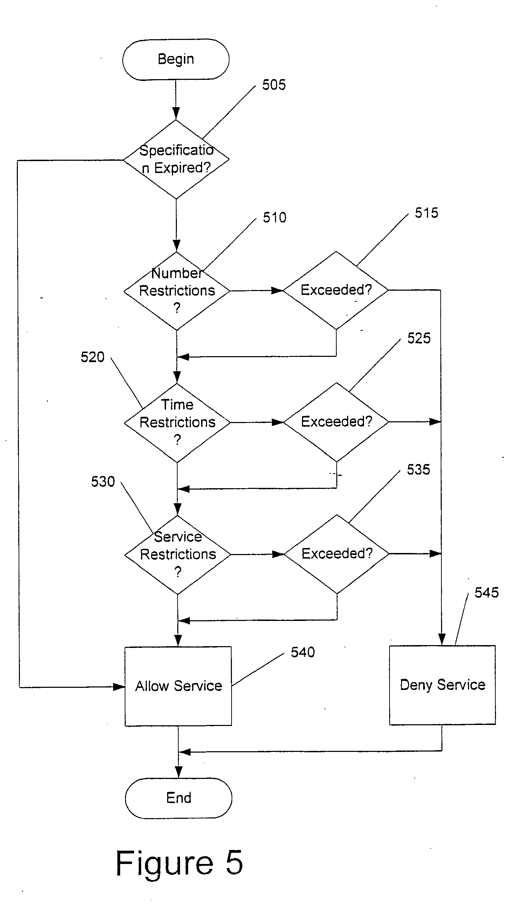

Operations related to limiting usage of the mobile terminal **100** per a usage specification, corresponding to **Block 425** of **Figure 3** will now be described for some embodiments of the present invention with reference to the flowchart illustration of **Figure 5****.** For the operations illustrated in **Figure 5****,** mobile terminal **100,** upon receipt of a request to place or receive a call or other provide some other service from a user of the mobile terminal **100,** determines if the currently enabled usage specification has an associated expiration value and whether that specified expiration value has expired **(Block 505).** If so **(Block 505),** then service is allowed **(Block 540).** If the current usage specification is not yet expired **(Block 505),** then it is determined if any number restrictions (allowed or restricted) have been identified **(Block 510).** If so, it is determined if the number restrictions would be exceeded (violated) **(Block 515).** If number restrictions apply and such restrictions would be exceeded or violated by the specific requested service, service is denied **(Block 545).** In other words, the mobile terminal **100** will not allow the user to place or receive call from the requested (or calling) number. It will further be understood that such number based restrictions may or may not be enabled for a particular mobile terminal **100** regardless of whether the mobile terminal **100** supports caller identification features. However, it will be understood that implementation of restrictions by calling number on the mobile terminal **100** (as opposed to restrictions on outgoing call placement) may require the ability to identify the calling number to implement any such restrictions.

If no number restrictions have triggered denial of service at **Block 545** it is determined if any usage time (duration or time of day) limitations are included in the active usage specification **(Block 520).** If so and if such a usage time limitation would be exceeded/violated **(Block 525)** then the requested service is denied **(Block 545).** If there are no active and exceeded time restrictions, it is determined if any enabled services of the mobile terminal have been restricted **(Block 530).** If there are any such service restrictions and the request would violate or exceed any such restriction **(Block 535),** the requested service is denied **(Block 545).** For example, if the user has requested access to the internet services function of the mobile terminal **100** and such usage has been disabled under the usage specification, the user's request to access the internet will be denied at **Block 545.** If none of the active restrictions of the current usage specification would be violated by the received user request for service, the service is allowed **(Block 540).**

The flowcharts, flow diagrams and block diagrams of **Figures 2** through **5** illustrate the architecture, functionality, and operation of possible implementations of systems, methods and computer program products for controlling usage of a mobile terminal according to embodiments of the present invention. In this regard, each block in the flow charts or block diagrams may represent a module, segment, or portion of code, which comprises one or more executable instructions for implementing the specified logical act(s). It should also be noted that, in some alternative implementations, the acts noted in the blocks may occur out of the order noted in the figures. For example, two blocks shown in succession may, in fact, be executed substantially concurrently, or the blocks may sometimes be executed in the reverse order, depending upon the functionality involved.

In the drawings and specification, there have been disclosed typical illustrative embodiments of the invention and, although specific terms are employed, they are used in a generic and descriptive sense only and not for purposes of limitation, the scope of the invention being set forth in the following claims.

## Claims

1. A method for controlling usage of a mobile terminal, the method comprising:
receiving (320) a usage specification including a specification of enabled services of the mobile terminal that are restricted, the enabled services that are restricted including internet access, multimedia messaging access, email, camera and/or video functions; and
denying (325) usage of the enabled services of the mobile terminal that are restricted and allowing usage of other enabled services of the mobile terminal based on the received usage specification responsive to receipt (305) of a valid authorization code,
said method being **characterized in that** the authorization code is received from a remote user over a wireless communication connection.

2. The method of Claim 1 wherein the authorization code and/or the usage specification are received from a keypad and/or input screen of the mobile terminal.

3. The method of Claim 1 wherein the authorization code and the usage specification are received from a remote user over a wireless communication connection.

4. The method of Claim 3 wherein the authorization code is received from a remote user over a wireless communication connection and wherein the authorization code is encoded to restrict viewing of the authorization code by a user of the mobile terminal.

5. The method of Claim 4 further comprising:
over-riding the usage specification responsive to receipt of a reset code.

6. The method of Claim 5 wherein over-riding the usage specification comprises selecting an alternative usage specification responsive to receipt of the reset code.

7. The method of Claim 6 wherein the alternative usage specification includes no restrictions to return the mobile terminal to a normal operating mode.

8. The method of Claim 4 wherein the usage specification is received from a remote user over a wireless communication connection.

9. The method of Claim 1 wherein limiting usage of the mobile terminal further comprises allowing placement of emergency calls even if usage of the mobile terminal is otherwise restricted.

10. The method of Claim 1 wherein limiting usage of the mobile terminal further comprises allowing placement of calls to a specified number even if usage of the mobile terminal is otherwise restricted.

11. The method of Claim 1 wherein the usage specification further includes a usage time limitation and wherein the usage time limitation includes a limitation on times of day when the mobile terminal may be used.

12. The method of Claim 1 wherein the usage specification further includes a usage time limitation and wherein the usage time limitation includes a limitation on the duration of usage of the mobile terminal.

13. A usage control system for a mobile terminal, the system comprising:
a user interface circuit (155) for receiving from a user an authorization code and a usage specification including a specification of enabled services of the mobile terminal that are restricted, the enabled services that are restricted including internet access, multimedia messaging access, email, camera and/or video functions; and
an access circuit (160) configured to deny usage of the enabled services of the mobile terminal that are restricted and allow usage of other enabled services of the mobile terminal based on the received usage specification responsive to receipt of a valid authorization code;
said system being **characterized in that** the user interface further includes a transceiver (125) configured to receive the authorization code from a remote user over a wireless communication connection.

14. A mobile terminal (165) including the usage control system of Claim 13.

15. The system of Claim 13 wherein the user interface includes a keypad (105) and/or input screen of the mobile terminal (165).

16. The system of Claim 15 wherein the user interface further includes a transceiver (125) configured to receive the authorization code and the usage specification from a remote user over a wireless communication connection.

17. The system of Claim 16 wherein the user interface is further configured to restrict viewing of the authorization code by a user of the mobile terminal. (165)

18. The system of Claim 17 wherein the access circuit (160) is further configured to over-ride the usage specification responsive to receipt of a reset code to return the mobile terminal (165) to a normal operating mode.

19. The system of Claim 13 wherein the user interface further comprises:
a usage controls menu of the mobile terminal (165);
a menu of usage restriction options; and
wherein the system further comprises a memory (130) including an identification of a valid authorization code and usage restriction options.

20. A computer program product for controlling usage of a mobile terminal, the computer program product comprising:
a computer-readable storage medium having computer-readable program code embodied in said medium, said computer-readable program code comprising:
computer-readable program code that receives a usage specification including a specification of enabled services of the mobile terminal that are restricted, the enabled services that are restricted including internet access, multimedia messaging access, email, camera and/or video functions; and
computer-readable program code that denies usage of the enabled services of the mobile terminal that are restricted and allows usage of other enabled services of the mobile terminal based on the received usage specification responsive to receipt of a valid authorization code,
said computer program product being **characterized in that** the authorization code is received from a remote user over a wireless communication connection.

## Patentansprüche

1. Verfahren zum Steuern der Benutzung eines mobilen Endgeräts, wobei das Verfahren Folgendes umfasst:
Empfangen (320) einer Benutzungsspezifikation, die eine Spezifikation von aktivierten Diensten des mobilen Endgeräts, die beschränkt sind, beinhaltet, wobei die aktivierten Dienste, die beschränkt sind, Internetzugangs-, Multimedianachrichtenzugangs-, E-Mail-, Kamera- und/oder Videofunktionen beinhalten; und
Verweigern (325) der Benutzung der aktivierten Dienste des mobilen Endgeräts, die beschränkt sind, und Zulassen der Benutzung anderer aktivierter Dienste des mobilen Endgeräts auf Grundlage der empfangenen Benutzungsspezifikation in Reaktion auf den Empfang (305) eines gültigen Berechtigungscodes,
wobei das Verfahren **dadurch gekennzeichnet ist, dass** der Berechtigungscode von einem entfernten Benutzer über eine drahtlose Kommunikationsverbindung empfangen wird.

2. Verfahren nach Anspruch 1, wobei der Berechtigungscode und/oder die Benutzungsspezifikation von einem Tastenfeld und/oder Eingabebildschirm des mobilen Endgeräts empfangen wird/werden.

3. Verfahren nach Anspruch 1, wobei der Berechtigungscode und die Benutzungsspezifikation von einem entfernten Benutzer über eine drahtlose Kommunikationsverbindung empfangen werden.

4. Verfahren nach Anspruch 3, wobei der Berechtigungscode von einem entfernten Benutzer über eine drahtlose Kommunikationsverbindung empfangen wird und wobei der Berechtigungscode codiert wird, um ein Anzeigen des Berechtigungscodes an einen Benutzer des mobilen Endgeräts zu beschränken.

5. Verfahren nach Anspruch 4, ferner umfassend:
Überschreiben der Benutzungsspezifikation in Reaktion auf den Empfang eines Rückstellcodes.

6. Verfahren nach Anspruch 5, wobei das Überschreiben der Benutzungsspezifikation Auswählen einer alternativen Benutzungsspezifikation in Reaktion auf den Empfang des Rückstellcodes umfasst.

7. Verfahren nach Anspruch 6, wobei die alternative Benutzungsspezifikation keine Beschränkungen beinhaltet, um das mobile Endgerät in einen normalen Betriebsmodus zurückzustellen.

8. Verfahren nach Anspruch 4, wobei die Benutzungsspezifikation von einem entfernten Benutzer über eine drahtlose Kommunikationsverbindung empfangen wird.

9. Verfahren nach Anspruch 1, wobei das Einschränken der Benutzung des mobilen Endgeräts ferner Zulassen des Durchführens von Notrufen umfasst, selbst wenn die Benutzung des mobilen Endgeräts ansonsten beschränkt ist.

10. Verfahren nach Anspruch 1, wobei das Einschränken der Benutzung des mobilen Endgeräts ferner Zulassen des Durchführens von Anrufen an eine vorgegebene Nummer umfasst, selbst wenn die Benutzung des mobilen Endgeräts ansonsten beschränkt ist.

11. Verfahren nach Anspruch 1, wobei die Benutzungsspezifikation ferner eine Benutzungszeiteinschränkung beinhaltet und wobei die Benutzungszeiteinschränkung eine Einschränkung der Uhrzeiten beinhaltet, zu denen das mobile Endgerät verwendet werden kann.

12. Verfahren nach Anspruch 1, wobei die Benutzungsspezifikation ferner eine Benutzungszeiteinschränkung beinhaltet und wobei die Benutzungszeiteinschränkung eine Einschränkung der Benutzungsdauer des mobilen Endgeräts beinhaltet.

13. Benutzungssteuersystem für ein mobiles Endgerät, wobei das System Folgendes umfasst:
eine Benutzerschnittstellenschaltung (155) zum Empfangen, von einem Benutzer, eines Berechtigungscodes und einer Benutzungsspezifikation, die eine Spezifikation von aktivierten Diensten des mobilen Endgeräts, die beschränkt sind, beinhaltet, wobei die aktivierten Dienste, die beschränkt sind, Internetzugangs-, Multimedianachrichtenzugangs-, E-Mail-, Kamera- und/oder Videofunktionen beinhalten; und
eine Zugangsschaltung (160), die dazu ausgelegt ist, die Benutzung der aktivierten Dienste des mobilen Endgeräts, die beschränkt sind, zu verweigern und die Benutzung anderer aktivierter Dienste des mobilen Endgeräts auf Grundlage der empfangenen Benutzungsspezifikation in Reaktion auf den Empfang eines gültigen Berechtigungscodes zuzulassen;
wobei das System **dadurch gekennzeichnet ist, dass** die Benutzerschnittstelle ferner einen Sendeempfänger (125) beinhaltet, der dazu ausgelegt ist, den Berechtigungscode von einem entfernten Benutzer über eine drahtlose Kommunikationsverbindung zu empfangen.

14. Mobiles Endgerät (165), welches das Benutzungssteuersystem nach Anspruch 13 beinhaltet.

15. System nach Anspruch 13, wobei die Benutzerschnittstelle ein Tastenfeld (105) und/oder den Eingabebildschirm des mobilen Endgeräts (165) beinhaltet.

16. System nach Anspruch 15, wobei die Benutzerschnittstelle ferner einen Sendeempfänger (125) beinhaltet, der dazu ausgelegt ist, den Berechtigungscode und die Benutzungsspezifikation von einem entfernten Benutzer über eine drahtlose Kommunikationsverbindung zu empfangen.

17. System nach Anspruch 16, wobei die Benutzerschnittstelle ferner dazu ausgelegt ist, das Anzeigen des Berechtigungscodes an einen Benutzer des mobilen Endgeräts (165) zu beschränken.

18. System nach Anspruch 17, wobei die Zugangsschaltung (160) ferner dazu ausgelegt ist, die Benutzungsspezifikation in Reaktion auf den Empfang eines Rückstellcodes zu überschreiben, um das mobile Endgerät (165) auf einen normalen Betriebsmodus zurückzusetzen.

19. System nach Anspruch 13, wobei die Benutzerschnittstelle ferner Folgendes umfasst:
ein Benutzungssteuerungsmenü des mobilen Endgeräts (165);
ein Menü von Benutzungsbeschränkungsoptionen; und
wobei das System ferner einen Speicher (130) umfasst, der eine Identifizierung eines gültigen Berechtigungscodes und Benutzungsbeschränkungsoptionen beinhaltet.

20. Computerprogrammprodukt zum Steuern der Benutzung eines mobilen Endgeräts, wobei das Computerprogrammprodukt Folgendes umfasst:
ein computerlesbares Speichermedium mit computerlesbarem Programmcode, der in dem Medium umgesetzt ist, wobei der computerlesbare Programmcode Folgendes umfasst:
computerlesbaren Programmcode, der eine Benutzungsspezifikation empfängt, die eine Spezifikation von aktivierten Diensten des mobilen Endgeräts, die beschränkt sind, beinhaltet, wobei die aktivierten Dienste, die beschränkt sind, Internetzugangs-, Multimedianachrichtenzugangs-, E-Mail-, Kamera- und/oder Videofunktionen beinhalten; und
computerlesbaren Programmcode, der eine Benutzung der aktivierten Dienste des mobilen Endgeräts, die beschränkt sind, verweigert und die Benutzung anderer aktivierter Dienste des mobilen Endgeräts auf Grundlage der empfangenen Benutzungsspezifikation in Reaktion auf den Empfang eines gültigen Berechtigungscodes zulässt,
wobei das Computerprogrammprodukt **dadurch gekennzeichnet ist, dass** der Berechtigungscode von einem entfernten Benutzer über eine drahtlose Kommunikationsverbindung empfangen wird.

## Revendications

1. Procédé pour contrôler l'utilisation d'un terminal mobile, le procédé comprenant les étapes consistant à :
recevoir (320) une spécification d'utilisation incluant une spécification de services activés du terminal mobile qui sont restreints, les services activés qui sont restreints incluant l'accès à Internet, l'accès à la messagerie multimédia, le courriel, l'appareil photo et/ou des fonctions vidéo ; et
refuser (325) l'utilisation des services activés du terminal mobile qui sont restreints et permettre l'utilisation d'autres services activés du terminal mobile sur la base de la spécification d'utilisation reçue en réponse à la réception (305) d'un code d'autorisation valide,
ledit procédé étant **caractérisé en ce que**
le code d'autorisation est reçu en provenance d'un utilisateur distant sur une connexion de communication sans fil.

2. Procédé selon la revendication 1, dans lequel le code d'autorisation et/ou la spécification d'utilisation sont reçus en provenance d'un clavier et/ou d'un écran d'entrée du terminal mobile.

3. Procédé selon la revendication 1, dans lequel le code d'autorisation et la spécification d'utilisation sont reçus en provenance d'un utilisateur distant sur une connexion de communication sans fil.

4. Procédé selon la revendication 3, dans lequel le code d'autorisation est reçu en provenance d'un utilisateur distant sur une connexion de communication sans fil et dans lequel le code d'autorisation est encodé pour restreindre la visualisation du code d'autorisation par un utilisateur du terminal mobile.

5. Procédé selon la revendication 4, comprenant en outre l'étape consistant à :
outrepasser la spécification d'utilisation en réponse à la réception d'un code de réinitialisation.

6. Procédé selon la revendication 5, dans lequel l'outrepassement de la spécification d'utilisation comprend la sélection d'une spécification d'utilisation alternative en réponse à la réception du code de réinitialisation.

7. Procédé selon la revendication 6, dans lequel la spécification d'utilisation alternative n'inclut aucune restriction pour ramener le terminal mobile à un mode de fonctionnement normal.

8. Procédé selon la revendication 4, dans lequel la spécification d'utilisation est reçue en provenance d'un utilisateur distant sur une connexion de communication sans fil.

9. Procédé selon la revendication 1, dans lequel la limitation d'utilisation du terminal mobile comprend en outre la permission de passer des appels d'urgence même si l'utilisation du terminal mobile est par ailleurs restreinte.

10. Procédé selon la revendication 1, dans lequel la limitation d'utilisation du terminal mobile comprend en outre la permission de passer des appels vers un numéro spécifié même si l'utilisation du terminal mobile est par ailleurs restreinte.

11. Procédé selon la revendication 1, dans lequel la spécification d'utilisation inclut en outre une limitation de temps d'utilisation et dans lequel la limitation de temps d'utilisation inclut une limitation d'heures de la journée où le terminal mobile peut être utilisé.

12. Procédé selon la revendication 1, dans lequel la spécification d'utilisation inclut en outre une limitation de temps d'utilisation et dans lequel la limitation de temps d'utilisation inclut une limitation de la durée d'utilisation du terminal mobile.

13. Système de contrôle d'utilisation pour un terminal mobile, le système comprenant :
un circuit d'interface utilisateur (155) pour recevoir en provenance d'un utilisateur un code d'autorisation et une spécification d'utilisation incluant une spécification de services activés du terminal mobile qui sont restreints, les services activés qui sont restreints incluant l'accès à Internet, l'accès à la messagerie multimédia, le courriel, l'appareil photo et/ou des fonctions vidéo ; et
un circuit d'accès (160) configuré pour refuser l'utilisation des services activés du terminal mobile qui sont restreints et permettre l'utilisation d'autres services activés du terminal mobile sur la base de la spécification d'utilisation reçue en réponse à la réception d'un code d'autorisation valide ;
ledit système étant **caractérisé en ce que**
l'interface utilisateur inclut en outre un émetteur-récepteur (125) configuré pour recevoir le code d'autorisation en provenance d'un utilisateur distant sur une connexion de communication sans fil.

14. Terminal mobile (165) incluant le système de contrôle d'utilisation selon la revendication 13.

15. Système selon la revendication 13, dans lequel l'interface utilisateur inclut un clavier (105) et/ou un écran d'entrée du terminal mobile (165).

16. Système selon la revendication 15, dans lequel l'interface utilisateur inclut en outre un émetteur-récepteur (125) configuré pour recevoir le code d'autorisation et la spécification d'utilisation en provenance d'un utilisateur distant sur une connexion de communication sans fil.

17. Système selon la revendication 16, dans lequel l'interface utilisateur est en outre configurée pour restreindre la visualisation du code d'autorisation par un utilisateur du terminal mobile (165).

18. Système selon la revendication 17, dans lequel le circuit d'accès (160) est en outre configuré pour outrepasser la spécification d'utilisation en réponse à la réception d'un code de réinitialisation pour ramener le terminal mobile (165) à un mode de fonctionnement normal.

19. Système selon la revendication 13, dans lequel l'interface utilisateur comprend en outre :
un menu de contrôles d'utilisation du terminal mobile (165) ;
un menu d'options de restriction d'utilisation ; et
le système comprenant en outre une mémoire (130) incluant une identification d'un code d'autorisation valide et des options de restriction d'utilisation.

20. Produit de programme informatique pour contrôler l'utilisation d'un terminal mobile, le produit de programme informatique comprenant :
un support de stockage lisible par ordinateur ayant un code de programme lisible par ordinateur incorporé dans ledit support, ledit code de programme lisible par ordinateur comprenant :
un code de programme lisible par ordinateur qui reçoit une spécification d'utilisation incluant une spécification de services activés du terminal mobile qui sont restreints, les services activés qui sont restreints incluant l'accès à Internet, l'accès à la messagerie multimédia, le courriel, l'appareil photo et/ou des fonctions vidéo ; et
un code de programme lisible par ordinateur qui refuse l'utilisation des services activés du terminal mobile qui sont restreints et permet l'utilisation d'autres services activés du terminal mobile sur la base de la spécification d'utilisation reçue en réponse à la réception d'un code d'autorisation valide,
ledit produit de programme informatique étant **caractérisé en ce que**
le code d'autorisation est reçu en provenance d'un utilisateur distant sur une connexion de communication sans fil.
